# EUROPÄISCHE PATENTSCHRIFT

(11) **EP 3 077 278 B1**
(45) Veröffentlichungstag und Bekanntmachung des Hinweises auf die Patenterteilung: **31.10.2018**
(21) Anmeldenummer: 14792843.6
(22) Anmeldetag: 03.11.2014
(51) Int. Cl.: B62D 35/02, B60R 13/08, B60G 3/20, B60G 7/00, B62D 25/20, B62D 29/04

(54) **UNTERBODENVERKLEIDUNG FÜR EIN ZWEISPURIGES KRAFTFAHRZEUG SOWIE ZWEISPURIGES KRAFTFAHRZEUG MIT EINER SOLCHEN UNTERBODENVERKLEIDUNG**
UNDERBODY CLADDING FOR A TWO-TRACK MOTOR VEHICLE AND TWO-TRACK MOTOR VEHICLE WITH SUCH AN UNDERBODY CLADDING
HABILLAGE DE DESSOUS DE CAISSE POUR UN VÉHICULE AUTOMOBILE À DEUX VOIES AINSI QUE VÉHICULE AUTOMOBILE À DEUX VOIES DOTÉ D'UN TEL HABILLAGE DE DESSOUS DE CAISSE

(30) Priorität: 06.12.2013 DE 102013225083
(43) Veröffentlichungstag der Anmeldung: 12.10.2016
(73) Patentinhaber: Bayerische Motoren Werke Aktiengesellschaft, 80809 München (DE)
(72) Erfinder: SCHMIDT, Roland, 82131 Stockdorf (DE); SCHOLZ, Hubert, 81543 München (DE)
(86) Internationale Anmeldenummer: PCT/EP2014/073610
(87) Internationale Veröffentlichungsnummer: WO 2015/082149

(56) Entgegenhaltungen:
- EP-B1- 0 888 956
- DE-A1- 10 209 591
- FR-A1- 2 896 224
- FR-A1- 2 961 468

## Beschreibung

Die Erfindung betrifft eine Unterbodenverkleidung für ein zweispuriges Kraftfahrzeug mit radführenden Lenkern als Teil einer Hinterachse, insbesondere für einen Personenkraftwagen, zur Verkleidung des Unterbodens wenigstens auf einer Fahrzeugseite im Bereich der radführenden Lenker der Hinterachse sowie ein zweispuriges Kraftfahrzeug mit einer solchen Unterbodenverkleidung, wobei die Unterbodenverkleidung derart ausgebildet ist, dass sie sich in einem funktionsgemäßen, an einem zweispurigen Kraftfahrzeug montierten Zustand unterhalb der radführenden Lenker zumindest teilweise in einer im Wesentlichen horizontalen Ebene erstreckt und wenigstens in Richtung fahrzeugaußen bis nahe an eine Innenseite eines über einen Radträger an den radführenden Lenkern angebundenen Hinterrades des Kraftfahrzeugs heranreicht, wobei die Unterbodenverkleidung in Fahrzeuglängsrichtung in drei Abschnitte unterteilt ist, und zwar in einen vorderen Abschnitt, einen mittleren Abschnitt und einen hinteren Abschnitt, wobei der mittlere Abschnitt sich wenigstens über einen Bereich unterhalb der radführenden Lenker auf einer Fahrzeugseite erstreckt und derart ausgebildet ist, dass er in einem funktionsgemäßen, an einem Kraftfahrzeug montierten Zustand im Fahrbetrieb des Kraftfahrzeugs zumindest teilweise einer im Wesentlichen vertikalen Bewegung der radführenden Lenker folgen und/oder nachgeben kann, und wobei der vordere Abschnitt und der hintere Abschnitt der Unterbodenverkleidung derart ausgebildet sind, dass sie ortsfest am Kraftfahrzeug anordbar sind und in einem funktionsgemäßen, am Kraftfahrzeug montierten Zustand einer im Wesentlichen vertikalen Bewegung der radführenden Lenker nicht folgen und/oder nachgeben.

Derartige, gattungsgemäße Unterbodenverkleidungen für zweispurige Kraftfahrzeuge sind aus dem Stand der Technik allgemein bekannt, beispielsweise aus der EP 0 888 956 B1, der DE 31 10 991 A, der WO 2010/136460 A1, der DE 10 2010 004 532 A1, der DE 32 39 946 A1 sowie aus der DE 102 09 591 A1 und der FR 2 691 468 A1. Mit den in den vorgenannten Druckschriften offenbarten Unterbodenverkleidungen kann in einem funktionsgemäßen, an einem zweispurigen Kraftfahrzeug montierten Zustand nur ein Bereich des Unterbodens unmittelbar unterhalb der Radaufhängung auf einer Innenseite eines Radhauses abgedeckt werden, nicht jedoch angrenzende Bereiche, so dass zur weiteren Abdeckung in der Regel zusätzliche Unterbodenverkleidungsteile erforderlich sind, was häufig aerodynamische Nachteile mit sich bringt und insbesondere zu einer unerwünschten Erhöhung des Luftwiderstandsbeiwerts (cₓ) führen kann. Oder aber die beschriebenen Unterbodenverkleidungen weisen relativ großflächige, elastisch ausgebildete Abschnitte auf, welche jedoch aufgrund ihres nachgiebigen Materials, das zur Vermeidung einer Kollision mit den beweglichen radführenden Lenkern erforderlich ist, zum Flattern neigen.

Aufgabe der vorliegenden Erfindung ist es somit, eine verbesserte, großflächige Unterbodenverkleidung bereitzustellen, welche insbesondere eine reduzierte Flatterneigung aufweist und sich über einen größeren Bereich als nur den Bereich unterhalb der radführenden Lenker eines zweispurigen Kraftfahrzeugs erstreckt.

Gelöst wird diese Aufgabe durch eine Unterbodenverkleidung mit den Merkmalen von Anspruch 1 sowie durch ein zweispuriges Kraftfahrzeug mit den Merkmalen von Anspruch 11. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Eine erfindungsgemäße Unterbodenverkleidung ist dadurch gekennzeichnet, dass der mittlere Abschnitt zumindest über einen Teil seiner Breite mit dem vorderen Abschnitt und/oder dem hinteren Abschnitt verbunden ist.

Ein erfindungsgemäßes, zweispuriges Kraftfahrzeug ist dadurch gekennzeichnet, dass es eine erfindungsgemäße Unterbodenverkleidung aufweist.

Mit einer erfindungsgemäßen Unterbodenverkleidung kann erreicht werden, dass die radführenden Lenker der Hinterachse auf der Fahrzeugseite, auf welcher die Unterbodenverkleidung in einem funktionsgemäßen, montierten Zustand angeordnet ist, insbesondere die unteren Lenker, vor allem bei Vorwärtsfahrt, nicht unmittelbar umströmt werden, sondern unterströmt werden. D.h. die Anströmung kann mittels der erfindungsgemäßen Unterbodenverkleidung unterhalb der radführenden Lenker der Hinterachse an den unteren radführenden Lenkern vorbei in Richtung Fahrzeugheck geführt werden. Dadurch kann verhindert werden, dass ein Bauraum, im welchen die radführenden Lenker angeordnet sind, in Fahrzeuglängsrichtung durchströmt wird, was sich sehr vorteilhaft auf die Aerodynamik auswirkt und insbesondere zu einem reduzierten Luftwiderstandsbeiwert (cₓ) führen kann.

Die erfindungsgemäße Unterteilung der Unterbodenverkleidung in drei Abschnitte, von denen der mittlere der Bewegung der radführenden Lenker nachgeben bzw. ausweichen kann und der vordere Abschnitt und der hintere Abschnitt jeweils ortsfest am Fahrzeug befestigt werden können, ermöglicht die Bereitstellung einer verbesserten, großflächigen Unterbodenverkleidung, welche sich über einen größeren Bereich als nur den Bereich unterhalb der radführenden Lenker erstreckt und die eine reduzierte Flatterneigung aufweist.

Die ortsfeste Anordnung bezieht sich dabei auf die Anbindungspunkte des vorderen Abschnitts und des hinteren Abschnitts der Unterbodenverkleidung, d.h. nur diese sind ortsfest angebunden bzw. ortsfest fixiert und eine Bewegung der übrigen Bereiche des vorderen und des hinteren Abschnitts aufgrund einer Bewegung in sich ist dadurch nicht ausgeschlossen. Insbesondere schließt die ortsfeste Anordnung des vorderen Abschnitts und des hinteren Abschnitts eine Verlagerung bzw. Bewegung von Teilen des vorderen und/oder des hinteren Abschnitts infolge der Materialeigenschaften, beispielsweise aufgrund eines elastischen Materials, nicht aus.

Bevorzugt ist die Unterbodenverkleidung dabei ein Flächengebilde, dass zur Verkleidung des Unterbodens auf einer Fahrzeugseite bzw. einer Seite der Hinterachse ausgebildet ist, d.h. zur Verkleidung der radführenden Lenker der Hinterachse auf der rechten Fahrzeugseite von unten oder zur Verkleidung der radführenden Lenker der Hinterachse auf der linken Fahrzeugseite von unten. Besonders bevorzugt ist die Unterbodenverkleidung zur Anordnung unmittelbar unterhalb der unteren radführenden Lenker bzw. einer unteren Lenkerebene ausgebildet, welche beispielsweise durch einen Federlenker und einen Längslenker gebildet werden kann.

Die Unterbodenverkleidung kann aber auch derart großflächig ausgebildet sein, dass sie zur Verkleidung des Unterbodens im gesamten Bereich der Hinterachse ausgebildet ist, d.h. sowohl zur Verkleidung des Unterbodens im Bereich der radführenden Lenkers des rechtsseitigen Teils der Hinterachse als auch im Bereich der radführenden Lenker des linksseitigen Teils der Hinterachse.

Bevorzugt reicht die Unterbodenverkleidung mit einer der Fahrzeugaußenseite zugewandten Kante dabei so nah wie möglich an ein Radhaus heran, wobei die Unterbodenverkleidung sich bevorzugt nicht nur in Richtung Fahrzeugaußenseite bis nahe an die Innenseite des über den Radträger an den radführenden Lenkern angebunden Hinterrades erstreckt, sondern sich besonders bevorzugt auch im Bereich vor und/oder hinter dem Hinterrad bis nah an das Radhaus heran erstreckt. D.h. besonders bevorzugt erstreckt sich die Unterbodenverkleidung U-förmig bzw. C-förmig um das Radhaus herum, insbesondere zumindest teilweise in der im Wesentlichen horizontalen Ebene.

Bevorzugt ist die Unterbodenverkleidung derart ausgestaltet bzw. erstreckt sich nur so nah an das Radhaus heran, dass sie auch bei zweispurigen Kraftfahrzeugen mit einer Hinterachslenkung eingesetzt werden kann, insbesondere bei Kraftfahrzeugen mit Radeinschlagswinkeln der Hinterräder von jeweils weniger als 5°.

In einer bevorzugten Ausgestaltung ist die Unterbodenverkleidung einteilig ausgebildet, wobei der Begriff einteilig dabei einstückig meint. D.h. in einer besonders bevorzugten Ausgestaltung ist die Unterbodenverkleidung kein aus mehreren einzelnen Flächengebilden zusammengesetztes Flächengebilde, sondern ein einziges, zusammenhängendes Flächengebilde und vorzugsweise aus einem Stück gefertigt. Die einteilige Ausgestaltung ermöglicht eine besonders einfache Montage und eine kostengünstige Herstellung.

In einer Weiterbildung der Erfindung ist die Unterbodenverkleidung durch wenigstens zwei Schlitze, die von einer, in einem funktionsgemäßen Einbauzustand der Innenseite des Hinterrades zugewandten Außenkante in Richtung fahrzeuginnen verlaufen, derart unterteilt, dass der mittlere Abschnitt zumindest teilweise einer vertikalen Bewegung der radführenden Lenker folgen und/oder nachgeben kann. D.h. vorzugsweise weist eine einteilige Unterbodenverkleidung wenigstens zwei Schlitze auf, welche jeweils den mittleren Abschnitt, zumindest über einen Teil der Breite der Unterbodenverkleidung, vom vorderen Abschnitt bzw. vom hinteren Abschnitt trennen, so dass der mittlere Abschnitt im Bereich der Schlitze bzw. über die Länge der Schlitze unabhängig vom benachbarten vorderen Abschnitt und dem benachbarten hinteren Abschnitt flexibel bewegt werden kann. Insbesondere derart, dass sich eine ausreichende Flexibilität bzw. Nachgiebigkeit des mittleren Abschnittes einstellt und der mittlere Abschnitt einer Bewegung der radführenden Lenker folgen kann bzw. nachgiebig bewegt werden kann.

Bevorzugt erstrecken sich die Schlitze dabei von der hinterradseitigen Außenkante der Unterbodenverkleidung schräg nach fahrzeuginnen, wobei die Schlitze vorzugsweise trapezförmig angeordnet sind und insbesondere die beiden Seitenkanten eines Trapezes bilden. Besonders bevorzugt ist dabei ein Abstand zwischen den weiter innenliegenden Schlitzenden zur Fahrzeugmitte hin größer als der Abstand zwischen den Schlitzenden im Bereich der Außenkante, d.h. der Abstand der Schlitzenden wird nach fahrzeugaußen hin kleiner.

Alternativ können die Schlitze auch derart angeordnet sein, dass sie die Seitenkanten eines Rechtecks, eines Parallelogramms oder dergleichen bilden oder beliebig zu einander verlaufen. Die Unterbodenverkleidung kann auch nur einen Schlitz aufweisen oder mehr als zwei Schlitze, wobei die Schlitze sowohl gleichlang als auch unterschiedlich lang ausgebildet sein können. Wichtig ist lediglich, dass der Schlitz bzw. die Schlitze derart angeordnet sind, dass der mittlere Abschnitt derart flexibel bzw. nachgiebig ist, dass die Bewegung der radführenden Lenker nicht behindert wird oder es infolge der Bewegung der radführenden Lenker zu einer Kollision bzw. Beschädigungen kommt, insbesondere an der Unterbodenverkleidung und/oder den radführenden Lenkern.

Weist die Unterbodenverkleidung, wie vorbeschrieben, zwei Schlitze auf, erstrecken sich diese vorzugsweise über wenigstens zwei Drittel der Breite der Unterbodenverkleidung in Fahrzeugquerrichtung. Besonders bevorzugt weisen die Schlitze mindestens eine Länge von wenigstens einem der radführenden Lenker auf, wobei die beiden Schlitze vorzugsweise die gleiche Länge aufweisen. In einigen Fällen kann es aber auch bereits ausreichend sein, wenn die Schlitze nur eine Länge von etwa zwei Dritteln der Länge eines der radführenden Lenker aufweisen.

In einer besonders bevorzugten Weiterbildung sind, bei zwei trapezförmig angeordneten Schlitzen, diese zwischen ihren fahrzeuginnenseitigen Enden durch ein Filmscharnier miteinander verbunden, vorzugsweise durch ein im Wesentlichen in Fahrzeuglängsrichtung verlaufendes Filmscharnier, d.h. mit einer im Wesentlichen in Fahrzeuglängsrichtung verlaufenden Scharnierachse, bezogen auf einen funktionsgemäßen, an einem Kraftfahrzeug montierten Zustand der Unterbodenverkleidung.

Ein Filmscharnier im Sinne dieser Anmeldung ist ein Scharnier, das durch einen Falz oder dergleichen entlang der Scharnierachse gebildet ist und einteilig mit den beiden zu verbindenden Elementen ausgebildet ist, wobei das Filmscharnier durch seine Biegsamkeit eine begrenzte Rotations- bzw. Klappbewegung der verbundenen Teile um die Scharnierachse ermöglicht.

Durch die Anordnung eines Filmscharniers zwischen den fahrzeuginnenliegenden Schlitz-Enden kann eine Art Knicklinie bzw. ein Falz im mittleren Abschnitt geschaffen werden, welcher bewirkt, dass sich der fahrzeugaußenseitige Teil des mittleren Abschnitts zwischen den Schlitzen leichter auf und ab bewegen kann und damit leichter, insbesondere mit weniger Widerstand, der Bewegung der radführenden Lenker folgen bzw. nachgeben kann. Dadurch kann eine größere Flexibilität bzw. einer größere Nachgiebigkeit des mittleren Abschnittes erreicht werden.

Die Anordnung eines zusätzlichen Filmscharniers ist insbesondere vorteilhaft, wenn die Flexibilität bzw. die Elastizität des Materials der Unterbodenverkleidung zusammen mit den Schlitzen nicht ausreicht, eine ausreichende Nachgiebigkeit bzw. eine ausreichende Federwirkung des mittleren Abschnitts zu schaffen, um einer Bewegung der radführenden Lenker folgen bzw. nachgeben zu können.

In einer alternativen Ausgestaltung ist die Unterbodenverkleidung nicht einteilig, sondern mehrteilig ausgebildet, wobei der mittlere Abschnitt in diesem Fall vorzugsweise mit dem vorderen Abschnitt und/oder dem hinteren Abschnitt über zumindest einen Teil der Breite der Unterbodenverkleidung verbunden ist, insbesondere durch ein Filmscharnier. D.h. in einer alternativen Ausgestaltung ist die Unterbodenverkleidung aus mehreren, einzelnen Flächengebilden zusammengesetzt und weist vorzugsweise eine Verbindung zwischen dem mittleren Abschnitt und dem vorderen Abschnitt und/oder zwischen dem mittleren Abschnitt und dem hinteren Abschnitt auf, die sich zumindest über einen Teil der Breite der Unterbodenverkleidung erstreckt.

In einer besonders bevorzugten Ausgestaltung ist der mittlere Abschnitt dabei jeweils über seine gesamte Breite der Unterbodenverkleidung mit dem vorderen Abschnitt und/oder dem hinteren Abschnitt verbunden. Auf diese Weise kann eine großflächige Unterbodenverkleidung geschaffen werden, mit der Strömungsverluste in den Übergangsbereichen zwischen dem mittleren Abschnitt und den angrenzenden Abschnitten weitestgehend vermieden werden können.

Durch die Ausgestaltung der Verbindung zwischen dem mittleren Abschnitt und dem vorderen bzw. dem hinteren Abschnitt als Filmscharnier kann auf besonders einfache und kostengünstige Art und Weise erreicht werden, dass der mittlere Abschnitt der Bewegung der radführenden Lenker folgen kann, während der vordere und hintere Abschnitt ortsfest am Fahrzeug relativ zum Unterboden angeordnet bzw. befestigt werden können, so dass sie der Bewegung der radführenden Lenker nicht folgen bzw. nachgeben müssen.

In einer bevorzugten Ausgestaltung durchstößt wenigstens eine Verbindungsachse, d.h. eine Achse, entlang derer der mittlere Abschnitt mit dem vorderen Abschnitt und/oder dem hinteren Abschnitt verbunden ist, einen vertikal nach unten bzw. senkrecht nach unten in die im Wesentlichen horizontale Ebene der Unterbodenverkleidung projizierten Kinematikpunkt wenigstens einer radträgerseitigen Anbindung eines der radführenden unteren Lenker. Dabei verläuft die Verbindungsachse vorzugsweise durch einen in die im Wesentlichen horizontale Ebene projizierten wirksamen Kinematikpunkt des radträgerseitigen Anbindungspunktes eines Federlenkers und/oder eines Längslenkers, insbesondere des Längslenkers.

Ist der mittlere Abschnitt sowohl mit dem vorderen Abschnitt als auch mit dem hinteren Abschnitt verbunden, schneiden sich besonders bevorzugt die beiden Verbindungsachsen, d.h. die Achse der Verbindung zwischen dem vorderen und dem mittleren Abschnitt sowie die Achse der Verbindung zwischen dem mittleren und dem hinteren Abschnitt, in der Ebene der Unterbodenverkleidung in Verlängerung einer senkrecht nach unten in diese Ebene projizierten Längsachse von einem der radführenden Lenker, insbesondere des Federlenkers. Dabei liegt der Schnittpunkt vorzugsweise weiter innen, d.h. weiter zu einer Fahrzeugmitte hin, als der wirksame Kinematikpunkt der fahrzeugaufbauseitigen Anbindung dieses Lenkers.

Durch eine geeignete Anordnung der Verbindungsachsen, vorzugsweise durch eine geeignete Winkelstellung der Verbindungsachsen zueinander, insbesondere durch die vorbeschriebene Anordnung, kann bei einer Bewegung der radführenden unteren Lenker eine Kollision mit der Unterbodenverkleidung, insbesondere mit dem mittleren Abschnitt, bzw. eine Beschädigung der einzelnen Komponenten vermieden werden.

In einer bevorzugten Ausgestaltung sind der vordere Abschnitt und der hintere Abschnitt aus einem flexiblen, insbesondere biegeweichen, Material, während der mittlere Abschnitt zumindest teilweise einen Bereich aus elastischem Material aufweist, vorzugsweise eine elastische Folie, insbesondere eine gummielastische Folie oder dergleichen, d.h. ein bereits mit geringen Kräften elastisch verformbares Material.

In einer alternativen Ausgestaltung können auch der vordere Abschnitt und der hintere Abschnitt ein elastisches Material aufweisen und der mittlere Abschnitt ein flexibles Material, wobei auch in diesem Fall der vordere Abschnitt und der hintere Abschnitt jeweils derart ausgebildet sind, dass sie ortsfest am Kraftfahrzeug angeordnet werden können.

Bevorzugt sind die Materialien für die einzelnen Abschnitte dabei derart gewählt bzw. aufeinander abgestimmt, dass der mittlere Abschnitt der Bewegung der radführenden Lenker folgen bzw. nachgeben oder ausweichen kann, ohne dass die radführenden Lenker mit der Unterbodenverkleidung kollidieren bzw. einzelne Komponenten beschädigt werden und vorzugsweise ohne dass die Verbindung zwischen dem mittleren Abschnitt und dem vorderen Abschnitt bzw. dem hinteren Abschnitt beschädigt wird.

In einer vorteilhaften Ausgestaltung ist der mittlere Abschnitt in Fahrzeuglängsrichtung wiederum in wenigstens zwei Unterabschnitte unterteilt. Und zwar in wenigstens einen vorderen Unterabschnitt und einen mittleren Unterabschnitt, wobei der mittlere Unterabschnitt sich wenigstens über einen Bereich unterhalb eines der radführenden Lenker erstreckt, vorzugsweise über den Bereich unterhalb des Lenkers, der bei funktionsgemäßer Verwendung die größte Vertikalbewegung ausführt, und wobei der mittlere Unterabschnitt besonders bevorzugt zumindest über einen Teil seiner Breite mit dem vorderen Unterabschnitt verbunden ist. D.h. in einer bevorzugten Ausgestaltung ist die Unterbodenverkleidung in wenigstens vier Abschnitte insgesamt unterteilt: einen vorderen Abschnitt, einen vorderen Unterabschnitt, einen mittleren Unterabschnitt und einen hinteren Abschnitt, wobei die beiden Unterabschnitte den mittleren Abschnitt bilden und wobei besonders bevorzugt der mittlere Unterabschnitt mit dem vorderen Unterabschnitt zumindest teilweise verbunden ist.

In einer besonders bevorzugten Ausgestaltung ist der mittlere Abschnitt in Fahrzeuglängsrichtung jedoch in wenigstens drei Unterabschnitte unterteilt. Und zwar in wenigstens einen vorderen Unterabschnitt, einen mittleren Unterabschnitt und einen hinteren Unterabschnitt, wobei der mittlere Unterabschnitt sich ebenfalls wenigstens über einen Bereich unterhalb eines der radführenden Lenker erstreckt, vorzugsweise über den Bereich unterhalb des Lenkers, der bei funktionsgemäßer Verwendung die größte Vertikalbewegung ausführt, und wobei der mittlere Unterabschnitt vorzugsweise zumindest über einen Teil seiner Breite mit dem vorderen Unterabschnitt und/oder dem hinteren Unterabschnitt verbunden ist. D.h. in einer besonders bevorzugten Ausgestaltung ist die Unterbodenverkleidung in wenigstens fünf Abschnitte insgesamt unterteilt: einen vorderen Abschnitt, einen vorderen Unterabschnitt, einen mittleren Unterabschnitt, einen hinteren Unterabschnitt und einen hinteren Abschnitt, wobei in diesem Fall die drei Unterabschnitte den mittleren Abschnitt bilden und der mittlere Unterabschnitt bevorzugt mit dem vorderen Unterabschnitt und/oder dem hinteren Unterabschnitt verbunden ist.

Sind die Unterabschnitte nicht miteinander verbunden, ist es vorteilhaft, insbesondere bezüglich der aerodynamischen Eigenschaften der Unterbodenverkleidung, wenn die Unterabschnitte möglichst nah aneinander heranreichen, d.h. wenn zwischen den Unterabschnitten in einem funktionsgemäßen, an einem Kraftfahrzeug montierten Zustand nur ein schmaler, d.h. möglichst kleiner, Spalt vorhanden ist, durch den möglichst keine Strömung von einer Unterseite der Unterbodenverkleidung hindurch auf eine Oberseite der Unterbodenverkleidung gelangen kann.

Bevorzugt weist nur der mittlere Unterabschnitt elastisches Material auf bzw. besteht daraus, während der vordere Unterabschnitt sowie der hintere Unterabschnitt aus flexiblem Material sind, insbesondere aus dem gleichen flexiblen Material wie der vordere Abschnitt und der hintere Abschnitt, wobei besonders bevorzugt jeweils der vordere Unterabschnitt einstückig mit dem vorderen Abschnitt und der hintere Unterabschnitt mit dem hinteren Abschnitt durch ein Filmscharnier verbunden ist.

Bevorzugt ist der mittlere Unterabschnitt aus elastischem Material und vorzugsweise mittels einer Kederverbindung mit dem vorderen Unterabschnitt und/oder dem hinteren Unterabschnitt d.h. den angrenzenden benachbarten Unterabschnitten, verbunden.

Unter einer Kederverbindung wird im Folgenden eine Verbindung verstanden, welche durch das formschlüssige Ineinandergreifen eines Keders in eine Kederschiene entsteht, wobei als Keder dabei eine Randverstärkung eines flexiblen bzw. elastischen Flächengebildes bezeichnet wird. Der Keder kann derart in die Kederschiene eingeführt werden, dass senkrecht zur Kederschienenachse eine formschlüssige Verbindung zwischen Kederschiene und Keder entsteht, so dass das Flächengebilde quer zur Kederschiene flächig gespannt werden kann. Kederverbindungen an sich sind aus dem Stand der Technik allgemein bekannt, beispielsweise zur Befestigung eines Vorzeltes an einem Wohnwagen.

Als besonders vorteilhaft hat sich eine Unterbodenverkleidung herausgestellt, insbesondere hinsichtlich der Kosten, bei welcher der vordere Unterabschnitt und der mittlere Unterabschnitt mittels einer Kederverbindung über die gesamte Breite der Unterbodenverkleidung miteinander verbunden sind, der hintere Unterabschnitt jedoch nur durch einen Spalt, insbesondere einen möglichst schmalen Spalt, bezogen auf eine Ruhestellung der radführenden Lenker, vom mittleren Unterabschnitt getrennt ist. D.h. besonders vorteilhaft in Bezug auf die Kosten ist eine Unterbodenverkleidung, bei welcher der mittlere Unterabschnitt nur mit dem vorderen Unterabschnitt verbunden ist, nicht jedoch mit dem hinteren Unterabschnitt, sondern von diesem durch einen Spalt getrennt ist.

Um ein Flattern zu vermeiden, ist die Unterbodenverkleidung in einem funktionsgemäßen, an einem Kraftfahrzeug montierten Zustand, bevorzugt wenigstens mit einem Abschnitt, vorzugsweise mit dem mittleren Abschnitt, insbesondere mit dem mittleren Unterabschnitt, zumindest bereichsweise an einem der radführenden Lenker befestigt. Besonders bevorzugt ist dieser Abschnitt dabei an dem Lenker angebunden, der bei funktionsgemäßer Verwendung des Kraftfahrzeugs in vertikaler Richtung eine absolut am weitesten unten liegende Position einnehmen kann, insbesondere am Federlenker.

Zur Befestigung elastischer Abschnitte bzw. von Abschnitten die in sich nicht ausreichend steif sind, können sogenannte Inlays als Befestigungsmittel in die Unterbodenverkleidung eingesetzt werden, welche eine Fixierung bzw.

Anbindung des betreffenden Abschnitts am radführenden Lenker ermöglichen.

In Bereichen, in denen die Unterbodenverkleidung in sich ausreichend steif ist, erfolgt die Befestigung bevorzugt über wenigstens ein Kardanlager, das Relativbewegungen in alle Richtungen ermöglicht und gleichzeitig einen Winkelausgleich zulässt. Besonders vorteilhaft an Kardanlagern ist, dass deren Steifigkeit in der Regel je nach Belastungsrichtung weitestgehend einstellbar ist.

Besonders bevorzugt ist die Unterbodenverkleidung derart ausgebildet bzw. kann derart am Kraftfahrzeug befestigt werden, dass insbesondere der mittlere Abschnitt beim Einfedern des Hinterrades in seiner bisherigen Lage verbleibt und beim Ausfedern des Hinterrades der mittlere Abschnitt der Bewegung der radführenden Lenker folgen kann, wobei dazu vorzugsweise der mittlere Abschnitt beim Einfedern von den radführenden Lenkern entkoppelt werden kann, insbesondere durch eine entsprechend ausgestaltete Verbindung zwischen dem mittleren Abschnitt und den radführenden Lenkern. Dies ermöglicht vor allem bei hohen Beladungszuständen des Kraftfahrzeugs eine optimale Funktionalität einer erfindungsgemäßen Unterbodenverkleidung, insbesondere in Bezug auf die Aerodynamik.

Die übrige Befestigung der Unterbodenverkleidung, d.h. die übrige Befestigung am Kraftfahrzeug, erfolgt vorzugsweise auf übliche, aus dem Stand der Technik bekannte Weise, beispielsweise mittels Clipsen, Metallklammern und/oder Schrauben oder dergleichen.

In einer bevorzugten Ausgestaltung weist die Unterbodenverkleidung wenigstens eine Strömungslippe auf, vorzugsweise im mittleren Abschnitt, insbesondere parallel zur Innenseite des Hinterrades, d.h. in Fahrzeuglängsrichtung an der Außenkante der Unterbodenverkleidung. Vorzugsweise erstreckt sich die Strömungslippe dabei über die gesamte Länge des mittleren Abschnitts in Fahrzeuglängsrichtung, d.h. über den gesamten Bereich des mittleren Abschnitts. Die Strömungslippe kann aber auch länger sein und sich bis in den vorderen Abschnitt und oder den hinteren Abschnitt hinein erstrecken oder auch komplett entlang der zum Hinterrad zugewandten Außenkante der Unterbodenverkleidung verlaufen oder auch kürzer sein, je nach Bedarf.

Bevorzugt ist die Strömungslippe eine sich im Wesentlichen vertikal nach oben, d.h. von der Unterbodenverkleidung zu den Lenkern hin, erstreckende oder nach oben gebogene Strömungslippe, eine Strömungsleiste oder dergleichen. In einigen Fällen kann es aber auch vorteilhaft sein, wenn sich die Strömungslippe nach unten erstreckt oder sowohl nach oben als auch nach unten.

In einigen Fällen kann es ferner vorteilhaft sein, im Übergangsbereich zwischen den einzelnen Abschnitten, insbesondere wenn diese nicht miteinander verbunden sind, sondern durch einen Spalt getrennt sind, insbesondere zwischen dem hinteren Abschnitt und dem mittleren Abschnitt, eine Strömungslippe anzuordnen. Dadurch kann verhindert werden, dass ein Teil der Strömung zwischen den einzelnen Abschnitten hindurch auf die Oberseite der Unterbodenverkleidung geleitet wird.

Es können auch mehrere Strömungslippen vorgesehen sein, bevorzugt sowohl Strömungslippen entlang der dem Hinterrad zugewandten Außenkante der Unterbodenverkleidung und im Bereich der Unterteilung der einzelnen Abschnitte.

Diese und weitere Merkmale gehen außer aus den Ansprüchen und aus der Beschreibung auch aus den Zeichnungen hervor, wobei die einzelnen Merkmale jeweils für sich allein oder zu mehreren in Form von Unterkombinationen bei einer Ausführungsform der Erfindung verwirklicht sein und vorteilhafte sowie für sich genommen schutzfähige Ausführungen darstellen können, für die hier Schutz beansprucht wird.

Im Folgenden wird die Erfindung anhand eines bevorzugten Ausführungsbeispiels weiter erläutert, wobei die Erfindung dazu in den beigefügten Zeichnungen schematisch dargestellt ist. Erfindungswesentlich können dabei sämtliche näher beschriebenen Merkmale sein.

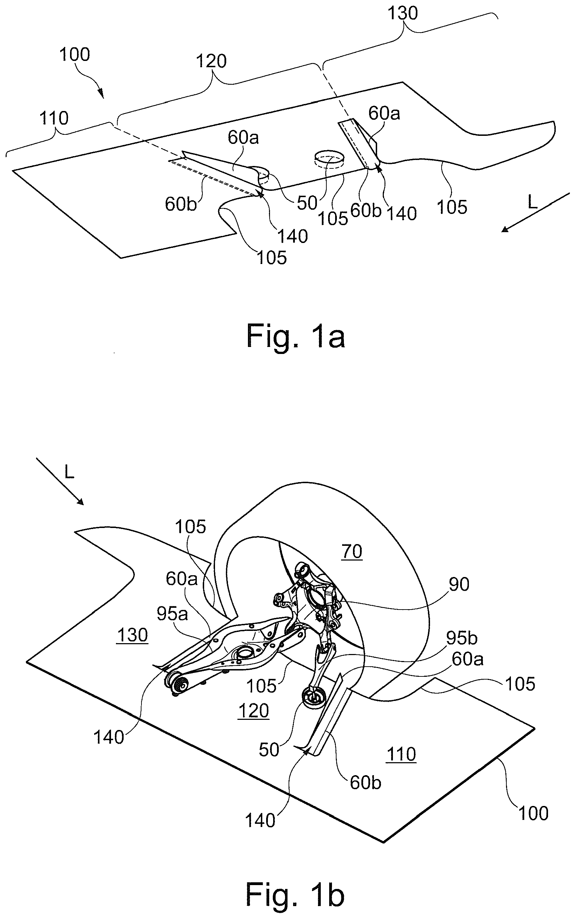

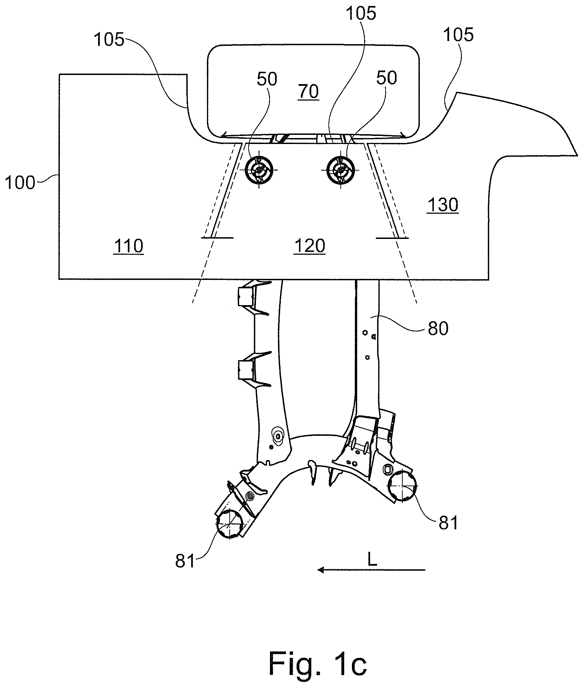

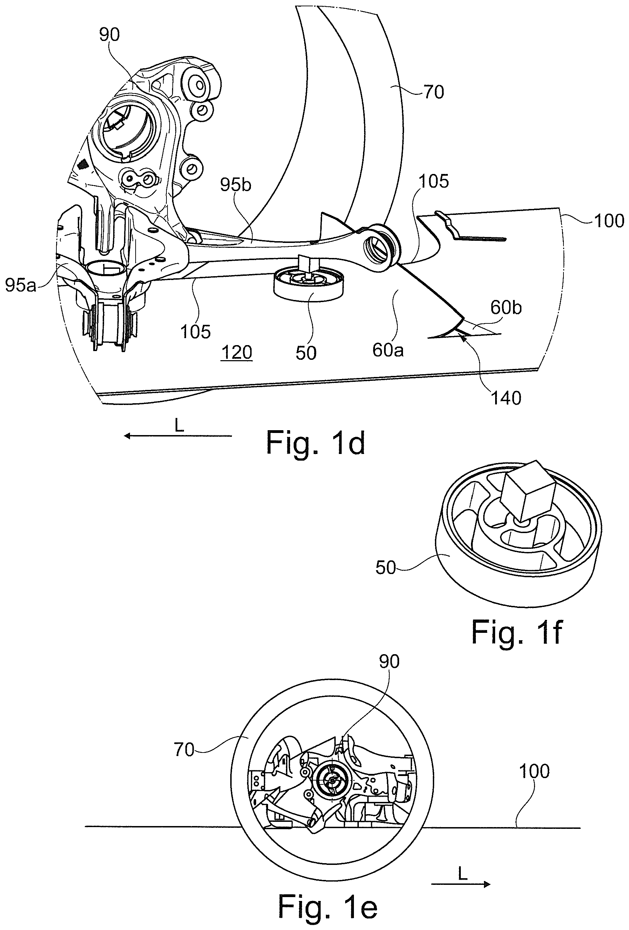

Die **Fig. 1a** bis **1e** zeigen ein erstes Ausführungsbeispiel einer erfindungsgemäßen Unterbodenverkleidung, wobei **Fig. 1a** das erste Ausführungsbeispiel einer erfindungsgemäßen Unterbodenverkleidung in Einzelteildarstellung in perspektivischer Ansicht zeigt, **Fig. 1b** die Unterbodenverkleidung aus Fig. 1a in einem funktionsgemäßen, im Bereich einer Hinterachse eines zweispurigen Kraftfahrzeug angeordneten Zustand in Ansicht von schräg oben, **Fig. 1c** die Unterbodenverkleidung aus den Fig. 1a und 1b in Ansicht von unten, **Fig. 1d** einen Ausschnitt der Unterbodenverkleidung aus den Fig. 1a bis 1c in vergrößerter Darstellung in einer Seitenansicht von fahrzeuginnen und **Fig. 1e** die Unterbodenverkleidung aus den Fig. 1a bis 1d in einer Seitenansicht von fahrzeugaußen und **Fig. 1f** ein Kardanlager zur Befestigung der Unterbodenverkleidung aus den Fig. 1a bis 1e an einem radführenden Lenker.

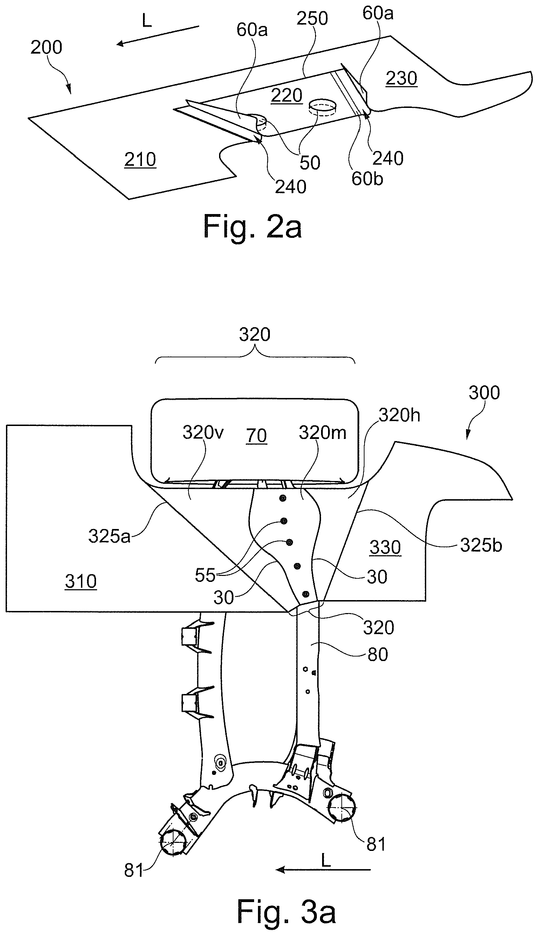

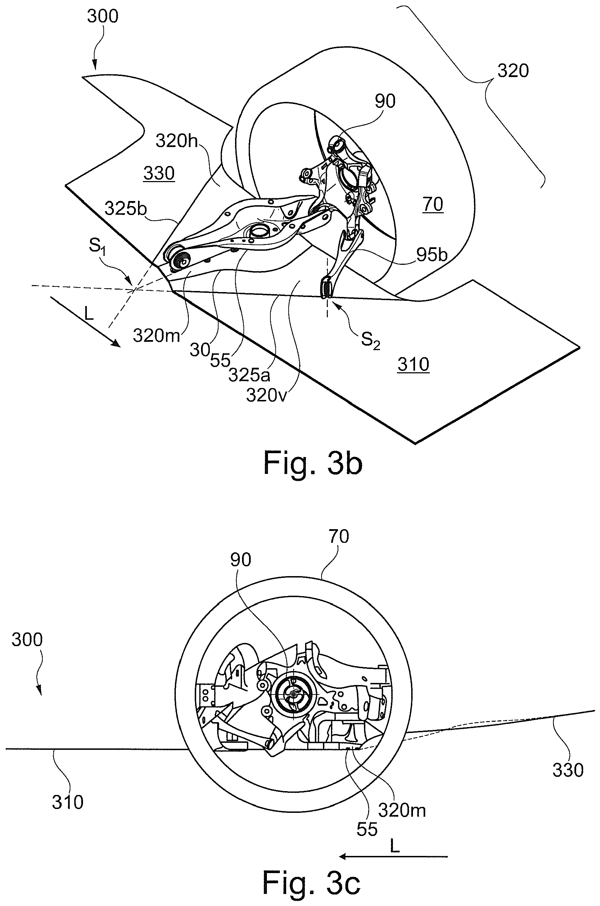

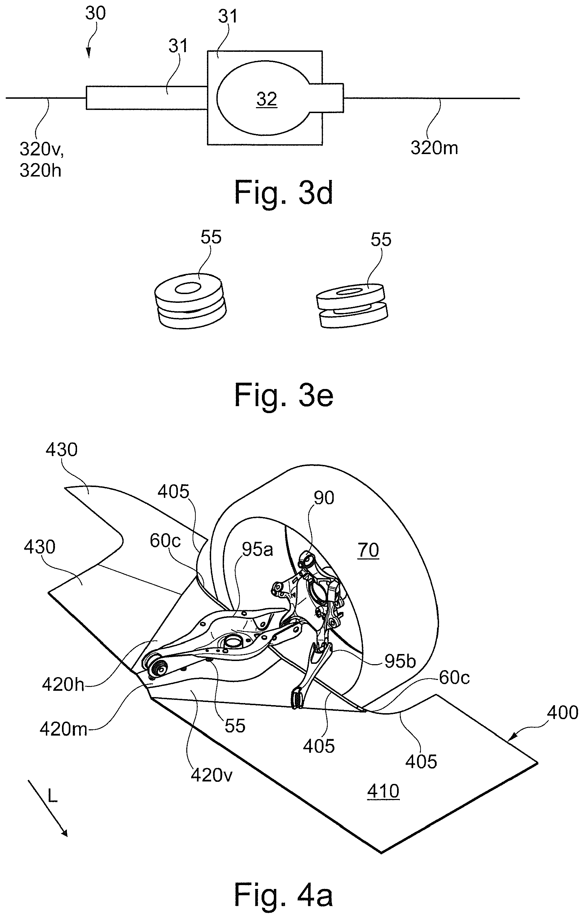

**Fig. 2a** zeigt ein zweites Ausführungsbeispiel einer erfindungsgemäßen Unterbodenverkleidung in Einzelteildarstellung in perspektivischer Ansicht, während in den **Fig. 3a** bis **Fig. 3c** ein drittes Ausführungsbeispiel dargestellt ist. Dabei zeigt **Fig. 3a** das dritte Ausführungsbeispiel einer erfindungsgemäßen Unterbodenverkleidung in einem funktionsgemäßen, im Bereich der Hinterachse eines zweispurigen Kraftfahrzeug angeordneten Zustand in Ansicht von unten, die **Fig. 3b** und **3c** die Unterbodenverkleidung aus Fig. 3a in Ansicht schräg von oben bzw. in Seitenansicht von fahrzeugaußen, **Fig. 3d** eine Prinzipdarstellung einer Kederverbindung, mittels derer einzelne Teile der Unterbodenverkleidung miteinander verbunden sein können, und **Fig. 3d** eine Einzelteildarstellung von Inlays, mit denen die Unterbodenverkleidung aus den Fig. 3a bis 3c teilweise am Kraftfahrzeug befestigt werden kann.

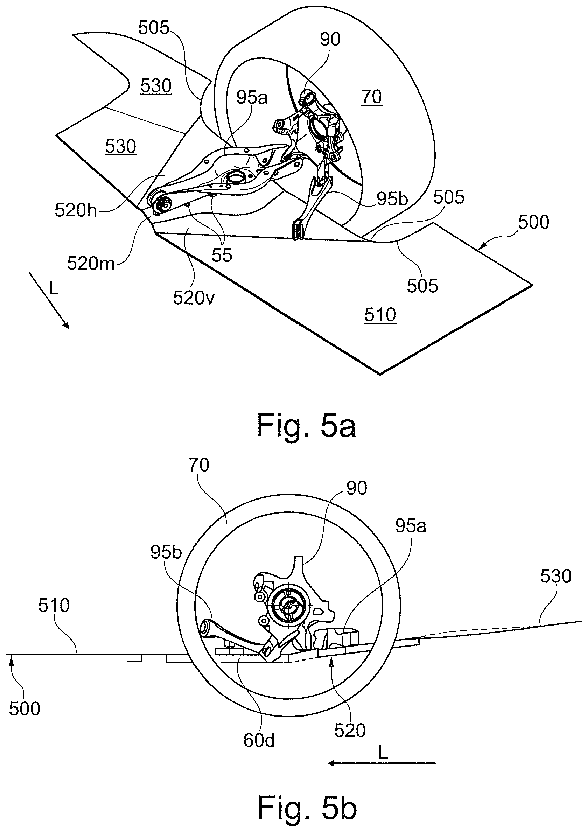

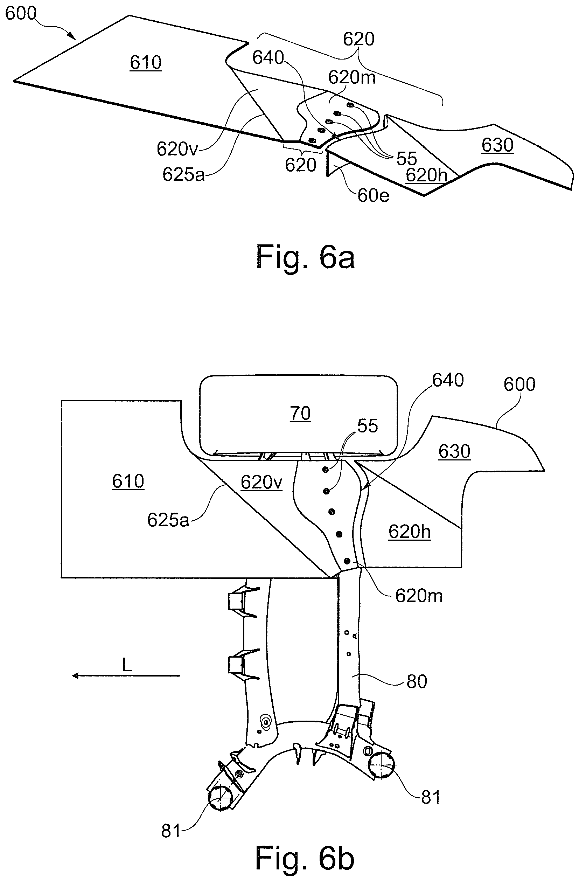

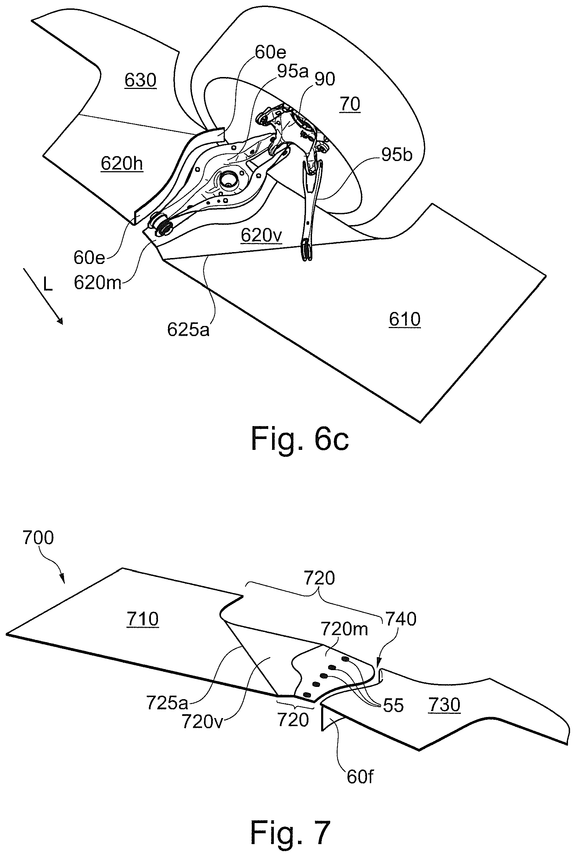

Die **Fig. 4a** zeigt ein viertes Ausführungsbeispiel einer erfindungsgemäßen Unterbodenverkleidung in einem funktionsgemäßen, an einem zweispurigen Kraftfahrzeug angeordneten Zustand in Ansicht von schräg oben, die **Fig. 5a** und **5b** ein fünftes Ausführungsbeispiel einer erfindungsgemäßen Unterbodenverkleidung in einem funktionsgemäß angeordneten Zustand in Ansicht von schräg oben bzw. in Seitenansicht von fahrzeugaußen, die **Fig. 6a** bis **6c** ein sechstes Ausführungsbeispiel einer erfindungsgemäßen Unterbodenverkleidung, wobei in Fig. 6a das sechste Ausführungsbeispiel in Einzelteildarstellung in perspektivischer Ansicht dargestellt ist und in den **Fig. 6b** und **6c** die Unterbodenverkleidung aus Fig. 6a in einem funktionsgemäß angeordneten Zustand in Ansicht von unten bzw. von schräg oben.

In **Fig. 7** ist ein siebtes Ausführungsbeispiel einer erfindungsgemäßen Unterbodenverkleidung in Einzelteildarstellung in perspektivischer Ansicht dargestellt.

In **Fig. 1a** ist ein erstes Ausführungsbeispiel einer erfindungsgemäßen Unterbodenverkleidung 100 in Einzelteildarstellung in perspektivischer Ansicht dargestellt, wobei diese Unterbodenverkleidung 100 als einteiliges Flächengebilde aus einem flexiblen Kunststoffmaterial ausgebildet ist und drei, in Fahrzeuglängsrichtung L hintereinander angeordnete Abschnitte 110, 120 und 130 aufweist, und zwar einen vorderen Abschnitt 110, einen mittleren Abschnitt 120 sowie einen hinteren Abschnitt 130. Der hintere Abschnitt 130 ist dabei der Abschnitt, welcher in einem funktionsgemäßen, an einem zweispurigen Kraftfahrzeug montierten Zustand der Unterbodenverkleidung 100, zum heckseitigen Ende des Kraftfahrzeugs zeigt, während der vordere Abschnitt 110 dem frontseitigen Ende zugewandt ist bzw. in Fahrzeuglängsrichtung L weiter vorne angeordnet ist, siehe auch **Fig. 1b** und **1c****.** Der mittlere Abschnitt 120 befindet sich dazwischen.

Die erfindungsgemäße Unterbodenverkleidung 100 ist dabei derart ausgebildet, dass sich in einem, wie in den **Fig. 1b** und **1c** dargestellten, funktionsgemäßen, an einem Kraftfahrzeug angeordneten Zustand, der mittlere Abschnitt 120 unterhalb der radführenden Lenker 95a und 95b befindet. Insbesondere, wie bei diesem Ausführungsbeispiel, unterhalb eines Federlenkers 95a und eines Längslenkers 95b, welche eine untere Lenkerebene bilden und mit einem Radträger 90 verbunden sind.

Die Unterbodenverkleidung 100 erstreckt sich im Wesentlichen in einer horizontalen Ebene, vgl. **Fig. 1e****,** und weist zwei schräg verlaufende, trapezförmig angeordnete Schlitze 140 auf, die sich jeweils über ca. zwei Drittel einer Breite der Unterbodenverkleidung 100 erstrecken. Dabei grenzen die Schlitze 140 den mittleren Abschnitt 120 vom vorderen Abschnitt 110 sowie vom hinteren Abschnitt 130 ab. Die Schlitze 140 weisen dabei eine in etwa konstante Schlitzbreite über ihre Länge auf.

Die Schlitze 140 sind bei diesem Ausführungsbeispiel derart angeordnet, dass sie die Seitenkanten eines Trapezes bilden, wobei die fahrzeugaußenseitigen Schlitz-Enden in Fahrzeuglängsrichtung einen kleineren Abstand zueinander aufweisen als die fahrzeuginnenseitigen Schlitz-Enden zueinander, d.h. die Schlitze 140 verlaufen von einer einem Hinterrad 70 zugewandten Außenkante 105 schräg nach vorne innen bzw. schräg nach hinten innen, siehe insbesondere **Fig. 1c**.

Die Schlitze 140, insbesondere deren trapezförmige Anordnung, bewirken zusammen mit der Flexibilität des Kunststoffmaterials, aus dem die Unterbodenverkleidung 100 ist, dass die Unterbodenverkleidung 100 im Bereich des mittleren Abschnitts 120 derart flexibel bzw. nachgiebig wird, dass der mittlere Abschnitt 120 einer Bewegung der radführenden Lenker 95a und 95b folgen kann, insbesondere einer Vertikalbewegung, beispielsweise beim Ein- bzw. Ausfedern des Hinterrades 70. Die Schlitze 140 müssen dabei nicht trapezförmig angeordnet sein wie bei dem ersten Ausführungsbeispiel. Wichtig ist nur, dass sie derart angeordnet sind, dass sich eine gewünschte bzw. erforderliche Flexibilität der Unterbodenverkleidung, insbesondere des mittleren Abschnittes 120, einstellt.

Um ein gezieltes, insbesondere geführtes, "Mit-Bewegen" des mittleren Abschnittes 120 mit den radführenden Lenkern 95a und 95b sicherzustellen und außerdem ein Flattern der Unterbodenverkleidung 100 zu vermeiden, insbesondere des mittleren Abschnitts 120, weist die Unterbodenverkleidung 100 bei diesem Ausführungsbeispiel zwei Kardanlager 50 zur Befestigung des mittleren Abschnittes 120 an den radführenden Lenkern 95a und 95b auf, wobei eines der Kardanlager 50 zur Befestigung am Federlenker 95a vorgesehen ist und eines zur Befestigung am Längslenker 95b, siehe insbesondere **Fig. 1b****,** **1c** und **1d****.** Derartige, wie in **Fig. 1f** beispielhaft dargestellte Kardanlager 50, sind aus dem Stand der Technik allgemein bekannt und ermöglichen in gewissen Grenzen eine Relativbewegung der durch das Kardanlager 50 verbundenen Teile sowie einen Winkelausgleich, wobei die Steifigkeiten des Kardanlagers 50 in der Regel je nach Bedarf eingestellt werden können.

An den Schlitzen 140 bzw. jeweils an einer Kante eines Schlitzes 140 ist bei diesem Ausführungsbeispiel eine nach oben gebogene Strömungslippe 60a angeordnet sowie jeweils eine sich im Wesentlichen innerhalb der horizontalen Ebene der Unterbodenverkleidung 100 erstreckende Strömungslippe 60b bzw. Strömungskante 60b, siehe insbesondere **Fig. 1a** und **1d****.** Die Strömungslippen 60a sind in besonders vorteilhafter Weise jeweils an der in Fahrzeuglängsrichtung L weiter hinten liegenden Kante des Schlitzes 140 angeordnet, wobei eine Höhe bzw. Breite der Strömungslippe 60a in Richtung fahrzeugaußen zunimmt, insbesondere proportional zum absoluten, maximalen Federweg in Richtung fahrzeugaußen. Die Strömungslippe 60a erstreckt sich dabei besonders bevorzugt über ihre Länge jeweils so weit nach oben, dass im Fahrbetrieb bei Vorwärtsfahrt bei einem Ausfedervorgang, d.h. wenn der mittlere Abschnitt nach unten bewegt wird, keine Luft in Fahrtrichtung auf einen dahinter liegenden Teil der Oberseite der Unterbodenverkleidung 100 strömen kann, was sich besonders vorteilhaft auf den Luftwiderstand bzw. den Luftwiderstandsbeiwert (cₓ) auswirken kann.

Wie aus **Fig. 1c** erkennbar ist, erstreckt sich die Unterbodenverkleidung 100 in Fahrzeugquerrichtung in Richtung fahrzeuginnen in etwa über eine halbe Breite eines Hinterachsträgers 80, welcher über Hinterachsträgerlager 81 in etwa mittig unterhalb des Fahrzeugs befestigt werden kann, so dass sich die Unterbodenverkleidung 100 in einem funktionsgemäßen, am Fahrzeug montierten Zustand nach fahrzeuginnen in etwa bis zur Fahrzeugmitte hin erstreckt.

In Richtung fahrzeugaußen erstreckt sich eine erfindungsgemäße Unterbodenverkleidung vorteilhaft wie bei diesem Ausführungsbeispiel bis nah an eine Innenseite eines über den Radträger 90 bzw. das an diesem befestigten Radlager an den radführenden Lenkern 95a und 95b befestigtes Hinterrad 70 heran und vor und hinter diesem herum, so dass ein Unterboden um ein Radhaus bzw. das Hinterrad 70 herum möglichst vollständig verkleidet ist, vorzugsweise nur begrenzt durch einen für einen Radfreigang erforderlichen Bauraum.

**Fig. 2a** zeigt ein zweites Ausführungsbeispiel einer erfindungsgemäßen Unterbodenverkleidung 200, wobei dieses Ausführungsbeispiel eine Weiterbildung der erfindungsgemäßen Unterbodenverkleidung 100 aus den Fig. 1a bis 1e ist und ebenfalls einen vorderen Abschnitt 210, einen mittleren Abschnitt 220 und einen hinteren Abschnitt 230 aufweist.

Die Unterbodenverkleidung 200 weist gegenüber der erfindungsgemäßen Unterbodenverkleidung 100 aus den Fig. 1a bis 1e zusätzlich ein in diesem Fall in Fahrzeuglängsrichtung L, zwischen den fahrzeuginneren Schlitz-Enden verlaufendes Filmscharnier 250 auf, welches zur Erhöhung der Flexibilität bzw. Nachgiebigkeit des mittleren Abschnittes 220 in vertikaler Richtung dient und insbesondere eine Art Rotations- bzw. Klappbewegung um eine Scharnierachse des Filmscharniers 250 ermöglicht. Dieses Filmscharnier 250 ist insbesondere vorteilhaft, wenn die Flexibilität des Materials der Unterbodenverkleidung 200 an sich nicht ausreichend ist zusammen mit den Schlitzen 140 bzw. 240 eine ausreichende Nachgiebigkeit zu erzielen, damit der mittlere Abschnitt 120 bzw. 220 der Bewegung der radführenden Lenker 95a, 95b folgen bzw. nachgeben oder ausweichen kann.

Die **Fig. 3a** bis **3c** zeigen ein alternatives Ausführungsbeispiel einer erfindungsgemäßen Unterbodenverkleidung 300, wobei diese erfindungsgemäße Unterbodenverkleidung 300 ebenfalls einen vorderen Abschnitt 310, einen mittleren Abschnitt 320 sowie einen hinteren Abschnitt 330 aufweist. Auch diese Unterbodenverkleidung 300 ist derart ausgebildet, dass sich in einem, wie in den **Fig. 3a** und **3b** dargestellten, funktionsgemäßen, an einem Kraftfahrzeug angeordneten Zustand, der mittlere Abschnitt 320 unterhalb der radführenden Lenker 95a und 95b befindet.

Allerdings ist bei dieser Unterbodenverkleidung 300 der mittlere Abschnitt 320 wiederum in drei Unterabschnitte 320v, 320m und 320h unterteilt, nämlich in einen vorderen Unterabschnitt 320v, einen mittleren Unterabschnitt 320m sowie einen hinteren Unterabschnitt 320h, wobei sich der mittlere Unterabschnitt 320m in einem funktionsgemäßen, an einem Kraftfahrzeug angeordneten Zustand unterhalb des Federlenkers 95a befindet.

Die Unterbodenverkleidung 300 unterscheidet sich von den zuvor beschriebenen Unterbodenverkleidungen 100 und 200 außerdem dadurch, dass sie sich nur teilweise in einer im Wesentlichen horizontalen Ebene erstreckt, siehe **Fig. 3c****,** insbesondere nur der vordere Abschnitt 310 sowie der vordere Unterabschnitt 320v. Der übrige Teil der Unterbodenverkleidung 300 erstreckt sich bei diesem Ausführungsbeispiel hingegen schräg nach hinten oben, wodurch eine Diffusorwirkung entsteht. Dadurch kann auf einfache Art und Weise der Abtrieb an der Hinterachse erhöht werden. In einigen Fällen kann es aber auch vorteilhaft sein, insbesondere im Hinblick auf den Luftwiderstandsbeiwert (cₓ), wenn die Unterbodenverkleidung sich vollständig in einer horizontalen Ebene erstreckt, wie beispielsweise bei den vorbeschriebenen Unterbodenverkleidungen 100 und 200, die in den Fig. 1a bis 1e und 2a dargestellt sind.

Des Weiteren ist die Unterbodenverkleidung 300 im Gegensatz zu den vorbeschriebenen Unterbodenverkleidungen 100 und 200 auch kein einteiliges Flächengebilde, sondern mehrteilig ausgebildet. D.h. die Unterbodenverkleidung 300 ist aus mehreren Einheiten zusammengesetzt, wobei in diesem Fall der vordere Abschnitt 310 einteilig mit dem vorderen Unterabschnitt 320v ausgebildet ist und der hintere Abschnitt 330 einteilig mit dem hinteren Unterabschnitt 320h und der mittlere Unterabschnitt 320m eine eigene Einheit bildet. D.h. die Unterbodenverkleidung 300 ist aus drei Einheiten bzw. Einzelteilen, insbesondere drei Flächengebilden, zusammengesetzt.

Der vordere Abschnitt 310 und der vordere Unterabschnitt 320v sowie der hintere Abschnitt 330 und der hintere Unterabschnitt 320h sind dabei aus einem flexiblen, aber nicht elastischen, d.h. nicht in alle Richtungen elastisch deformierbaren Material, während der mittlere Unterabschnitt 320m aus einem elastischen, d.h. vorzugsweise aus einem in alle Kraftrichtungen nachgiebigem Material ausgebildet ist, insbesondere einem gummielastischem Material, beispielsweise aus einer elastischen Folie oder dergleichen. Die Flexibilität bzw. Nachgiebigkeit des mittleren Abschnittes 320 wird dabei insbesondere durch das elastische Material des mittleren Unterabschnitts 320 erreicht.

Für eine möglichst vorteilhafte Aerodynamik sind der vordere Unterabschnitt 320v und der hintere Unterabschnitt 320h, wie bei diesem Ausführungsbeispiel, jeweils mittels einer Kederverbindung 30 mit dem elastischen, mittleren Unterabschnitt 320m verbunden. In **Fig. 3d** ist das Prinzip der Kederverbindung 30 schematisch dargestellt. Die Kederverbindung 30 weist einen Keder 32 sowie eine Kederschiene 31 auf, die als Führungsnut für den Keder 32 dient, wobei der Keder 32 eine Randverstärkung des mittleren Unterabschnittes 320m ist, d.h. eine Verstärkung einer Kante des elastischen Unterabschnittes 320m. Der Keder 32 ist dabei mit dem mittleren Unterabschnitt 320m fest verbunden, insbesondere mittels einer hier nicht näher dargestellten Kederfahne, welche den Keder 32 U-förmig ummantelt bzw. umgreift und deren beiden Enden jeweils am elastischen Unterabschnitt 320m befestigt sind. Der Keder 32 ist dabei derart in der ovalförmigen Kederschiene 31 geführt bzw. in die Kederschiene 31 eingebracht, dass senkrecht zur Kederschienenachse, welche sich senkrecht zur Zeichenebene erstreckt, eine formschlüssige Verbindung zwischen Kederschiene 31 und Keder 32 entsteht, so dass der mittlere Unterabschnitt 320m über an der Kederschiene 31 befindliche Befestigungsmittel zur Befestigung der Kederschiene 31 im Wesentlichen quer zur Kederschiene 31 flächig gespannt werden kann.

Bei diesem Ausführungsbeispiel erstreckt sich die Kederverbindung 30 über die gesamte Breite der Unterbodenverkleidung 300, zwar nicht unmittelbar in Fahrzeugquerrichtung, sondern bogenförmig, insbesondere im Wesentlichen korrespondierend zu einer Kontur des Federlenkers 95a. Durch die Kederverbindungen 30 kann der mittlere Unterabschnitt 320m insbesondere in Fahrzeuglängsrichtung L derart gespannt werden, dass eine Flatterneigung der Unterbodenverkleidung 300 deutlich reduziert werden kann.

Für eine weitere Reduzierung der Flatterneigung der Unterbodenverkleidung 300 sind in den mittleren Unterabschnitt 320m außerdem mehrere Inlays 55 zur Anbindung, insbesondere zur Verschraubung, des mittleren Unterabschnitts 320m am Federlenker 95a eingebracht, welche in **Fig. 3e** zum besseren Verständnis in Einzelteildarstellung gezeigt sind.

Damit der vordere Abschnitt 310 und der hintere Abschnitt 330 ortsfest am Fahrzeug befestigt werden können und der mittlere Abschnitt 320 mit seinen drei Unterabschnitten 320v, 320m und 320h dennoch der Bewegung der radführenden Lenker 95a, 95b folgen bzw. nachgeben kann, ist zwischen dem vorderen Abschnitt 310 und dem vorderen Unterabschnitt 320v sowie zwischen dem hinteren Unterabschnitt 320h und dem hinteren Abschnitt 330 jeweils ein Filmscharnier 325a bzw. 325b vorgesehen. Die Filmscharniere 325a und 325b ermöglichen dabei bevorzugt eine Art Ausgleichsbewegung, insbesondere ein Nachführen des vorderen Unterabschnittes 320v bzw. des hinteren Unterabschnittes 320h mit dem mittleren Unterabschnitt 320m, beispielsweise wenn dieser in Folge einer Vertikalbewegung der radführenden Lenker 95a, 95b nach unten verlagert wird bzw. nach unten ausweicht oder nachgibt.

Die Scharnierachsen der Filmscharniere 325a und 325b sind dabei derart angeordnet, dass sich die verlängerten Scharnierachsen im Schnittpunkt S₁ schneiden, der in der im Wesentlichen horizontalen Ebene des vorderen Abschnitts 310 der Unterbodenverkleidung 300 in Verlängerung einer senkrecht nach unten in diese Ebene projizierten Längsachse des Federlenkers 95a liegt, siehe Fig. 3b. Dabei liegt der Schnittpunkt S₁ weiter innen, d.h. weiter zu einer Fahrzeugmitte hin, als der wirksame Kinematikpunkt der fahrzeugaufbauseitigen Anbindung dieses Lenkers 95a, wobei der Schnittpunkt S₁ dabei bevorzugt umso weiter innen liegt, je breiter der mittlere Abschnitt 320 im Bereich einer Innenkante der Unterbodenverkleidung 300 ist. Ferner durchstößt die Verbindungsachse des Filmscharniers 325a, d.h. die Achse, entlang derer der mittlere Abschnitt 320 mit dem vorderen Abschnitt 310 verbunden ist, einen vertikal nach unten bzw. senkrecht nach unten in die im Wesentlichen horizontale Ebene projizierten Kinematikpunkt S₂ des Längslenkers 95b. Durch eine derartige, entsprechende Anordnung der Scharnierachsen, insbesondere durch die vorbeschriebene Anordnung, kann eine Kollision mit den radführenden Lenkern 95a, 95b vermieden werden.

Die **Fig. 4a** zeigt ein viertes Ausführungsbeispiel einer erfindungsgemäßen Unterbodenverkleidung 400, wobei es sich um eine Weiterbildung der in den Fig. 3a bis 3e dargestellten Unterbodenverkleidung 300 handelt, welche ebenfalls einen vorderen Abschnitt 410, einen mittleren Abschnitt 420 sowie einen hinteren Abschnitt 430 aufweist, wobei der mittlere Abschnitt 420 ebenfalls in einen vorderen Unterabschnitt 420v, einen mittleren Unterabschnitt 420m und einen hinteren Unterabschnitt 420h unterteilt ist.

Bei der Unterbodenverkleidung 400 sind der vordere Unterabschnitt 420v sowie der mittlere Unterabschnitt 420m jeweils zusätzlich mittels eines Kardanlagers 50 an den darüber angeordneten, radführenden Lenkern 95a und 95b befestigt. Dadurch kann das Flattern der Unterbodenverkleidung 400 noch weiter reduziert werden bzw. die Flatterneigung weiter deutlich verbessert werden. Des Weiteren weist dieses Ausführungsbeispiel, wie in Fig. 4a gut erkennbar ist, an der dem Hinterrad 70 zugewandten Außenkante 405 eine Strömungslippe 60c auf, welche sich im Wesentlichen in Fahrzeuglängsrichtung L über die gesamte Länge des mittleren Abschnittes 420 erstreckt und vertikal nach oben absteht. Mit Hilfe dieser Strömungslippe 60c kann weitestgehend vermieden werden, dass eine Strömung von einer Unterseite der Unterbodenverkleidung 400 auf eine Oberseite der Unterbodenverkleidung strömt, was sich nachteilig auf die Aerodynamik auswirken kann.

Die **Fig. 5a** und **5b** zeigen eine erfindungsgemäße Unterbodenverkleidung 500, die eine alternative Ausgestaltung der in den Fig. 4a und 4b dargestellten, erfindungsgemäßen Unterbodenverkleidung 400 ist und die ebenfalls einen vorderen Abschnitt 510, einen mittleren Abschnitt 520 sowie einen hinteren Abschnitt 530 aufweist, wobei der mittlere Abschnitt 520 ebenfalls in einen vorderen Unterabschnitt 520v, einen mittleren Unterabschnitt 520m und einen hinteren Unterabschnitt 520h unterteilt ist.

Die Unterbodenverkleidung 500 weist anstatt einer sich vertikal nach oben erstreckenden Strömungslippe 60c eine im Wesentlichen vertikal nach unten gerichtete Strömungslippe 60d auf, siehe insbesondere Fig. 5b, die sich in diesem Fall aber auch im Wesentlichen in Fahrzeuglängsrichtung L entlang der Außenkante 505 auf der Innenseite des Hinterrades 70 im mittleren Abschnitt 520 erstreckt. Durch eine derartige Strömungslippe 60d kann insbesondere vermieden werden, dass eine Strömung, mit der das Fahrzeug im Fahrbetrieb umströmt wird, von der Unterbodenverkleidung 500 in das Radhaus strömt.

Die **Fig. 6a** bis **6c** zeigen ein sechstes Ausführungsbeispiel einer erfindungsgemäßen Unterbodenverkleidung 600, die ebenfalls drei Abschnitte 610, 620 und 630 aufweist. Der mittlere Abschnitt 620 wiederum ist auch in drei Unterabschnitte 620v, 620m und 620h unterteilt, aber nicht wie beim dritten, vierten und fünften Ausführungsbeispiel, d.h. bei den erfindungsgemäßen Unterbodenverkleidungen 300, 400 und 500, jeweils mit dem vorderen Unterabschnitt 620v und dem hinteren Unterabschnitt 620h mittels einer Kederverbindung 30 verbunden, sondern der mittlere Unterabschnitt 620m und der hintere Unterabschnitt 620h sind lediglich durch einen schmalen Spalt 640 mit einer Spaltbreite von 5 mm voneinander getrennt. Die Spaltbreite kann aber auch weniger als 5 mm betragen, vorzugsweise 3 mm, oder mehr als 5 mm, insbesondere 5 bis 10 mm. Die Spaltbreite ist bevorzugt so klein wie möglich, wobei die Spaltbreite jedoch mindestens so groß ist, dass eine ausreichende Freigängigkeit für eine Bewegung des mittleren Unterabschnittes 620m vorhanden ist, wobei die erforderliche Freigängigkeit und damit eine erforderliche Mindest-Spaltbreite von der Kinematik und der Elastokinematik der Achse abhängig ist.

Dadurch, dass der mittlere Unterabschnitt 620m nicht mit dem hinteren Unterabschnitt 620h verbunden ist, kann eine Kederverbindung entfallen. Ferner muss der hintere Abschnitt 620h keine Ausgleichsbewegung ausführen und der Bewegung des mittleren Abschnittes 620m teilweise folgen, so dass kein Filmscharnier zwischen dem hinteren Unterabschnitt 620h und dem hinteren Abschnitt 630 der Unterbodenverkleidung 600 mehr erforderlich ist.

Infolgedessen, insbesondere dadurch dass bei dieser Ausführungsform nur noch ein Filmscharnier 625a sowie eine Kederverbindung 30 erforderlich ist, und die hintere Kederverbindung sowie das hintere Filmscharnier zwischen dem hinteren Unterabschnitt 620h und dem hinteren Abschnitt 630 entfallen können, ist diese Ausführungsform wesentlich kostengünstiger und weniger aufwendig gegenüber den zuvor beschriebenen Ausführungsformen einer erfindungsgemäßen Unterbodenverkleidung 300, 400 und 500. In einigen Fällen kann jedoch bereits mit einer derartigen erfindungsgemäßen Unterbodenverkleidung 600 eine vorteilhafte bzw. ausreichend vorteilhaft Aerodynamik erreicht werden, insbesondere wenn zusätzlich eine Strömungslippe 60e, angrenzend an den Spalt 640, vorgesehen ist. Dabei ist es besonders vorteilhaft, wenn die Strömungslippe 60e vorzugsweise, wie bei diesem Ausführungsbeispiel, an der Kante des hinteren Unterabschnittes 620h angeordnet wird und sich in etwa vertikal nach unten und über die gesamte Breite der Unterbodenverkleidung 600 in diesem Bereich erstreckt.

Der hintere Unterabschnitt 620h kann auch ganz entfallen bzw. einteilig mit dem hinteren Abschnitt 630 ausgebildet sein, was beispielhaft in **Fig. 7** dargestellt ist. Dabei zeigt **Fig. 7** ein siebtes Ausführungsbeispiel einer erfindungsgemäßen Unterbodenverkleidung in Einzelteildarstellung in perspektivischer Ansicht, wobei bei diesem Ausführungsbeispiel im Unterschied zu dem in den Fig. 6a bis 6c dargestellten sechsten Ausführungsbeispiel der mittlere Abschnitt 720 in nur zwei Unterabschnitte 720v und 720m, d.h. einen vorderen Unterabschnitt 720v und einen mittleren Unterabschnitt 720m, anstatt in drei Unterabschnitte, unterteilt ist.

Mit den beschriebenen Ausführungsbeispielen einer erfindungsgemäßen Unterbodenverkleidung 100, 200, 300, 400, 500, 600 und 700 werden jeweils großflächige und damit luftwiderstandsoptimierte Unterbodenverkleidungen 100, 200, 300, 400, 500, 600 und 700 bereitgestellt, welche eine Ausgleichsbewegung im Bereich der radführenden Lenker 95a, 95b ermöglichen, ohne mit diesen zu kollidieren, und die kaum zum Flattern neigen. Insbesondere kann mit einer erfindungsgemäßen Unterbodenverkleidung 100, 200, 300, 400, 500, 600 oder 700 eine äußerst vorteilhafte Aerodynamik des Unterbodens erreicht werden und dadurch ein geringerer Kraftstoffverbrauch sowie eine CO₂-Emission verringert werden. Eine erfindungsgemäße Unterbodenverkleidung kann dabei auch derart gestaltet werden, dass der Abtrieb beeinflusst wird, beispielsweise derart, dass sich der Abtrieb erhöht und das Fahrverhalten, insbesondere die Fahrdynamik, positiv beeinflusst werden, und/oder derart, dass der Abtrieb reduziert wird, was häufig zu einer Verringerung des Luftwiderstandsbeiwertes (cₓ) führt.

Selbstverständlich ist eine Vielzahl an Abwandlungen, insbesondere von konstruktiven Abwandlungen und sinnvollen Merkmalskombinationen, zu dem erläuterten Ausführungsbeispiel möglich, ohne den Inhalt der Patentansprüche zu verlassen.

### Bezugszeichenliste:

- 30: Kederverbindung
- 31: Kederschiene
- 32: Keder
- 50: Kardanlager
- 55: Inlay
- 60a, 60b, 60c, 60d, 60e, 60f: Strömungslippe

- 70: Hinterrad
- 80: Hinterachsträger
- 81: Hinterachsträgerlager
- 90: Radträger
- 95: radführende Lenker
- 95a: Federlenker
- 95b: Längslenker
- 100, 200, 300, 400, 500, 600,700: erfindungsgemäße Unterbodenverkleidung

- 105, 405, 505: Außenkante
- 110, 210, 310, 410, 510, 610, 710: vorderer Abschnitt

- 120, 220, 320 420, 520, 620, 720: mittlerer Abschnitt

- 130, 230, 330, 430, 530, 630, 730: hinterer Abschnitt
- 140, 240: Schlitze
- 250: Filmscharnier zwischen Schlitz-Enden
- 325a, 625a, 725a: Verbindung zwischen dem vorderen Abschnitt und dem mittleren Abschnitt

- 325b: Verbindung zwischen dem mittleren Abschnitt und dem hinteren Abschnitt
- 320v, 420v, 520v, 620v, 720v: vorderer Unterabschnitt des mittleren Abschnittes
- 320m, 420m, 520m, 620m, 720m: mittlerer Unterabschnitt des mittleren Abschnittes
- 320h, 420h, 520h, 620h: hinterer Unterabschnitt des mittleren Abschnittes
- 640, 740: Spalt
- L: Fahrzeuglängsrichtung

## Patentansprüche

1. Unterbodenverkleidung (100, 200, 300, 400, 500, 600, 700) für ein zweispuriges Kraftfahrzeug mit radführenden Lenkern (95a, 95b) als Teil einer Hinterachse, insbesondere für einen Personenkraftwagen, zur Verkleidung des Unterbodens wenigstens auf einer Fahrzeugseite im Bereich der radführenden Lenker (95a, 95b) der Hinterachse, wobei die Unterbodenverkleidung (100, 200, 300, 400, 500, 600, 700) derart ausgebildet ist, dass sie sich in einem funktionsgemäßen, an einem zweispurigen Kraftfahrzeug montierten Zustand unterhalb der radführenden Lenker (95a, 95b) zumindest teilweise in einer im Wesentlichen horizontalen Ebene erstreckt und wenigstens in Richtung fahrzeugaußen bis nahe an eine Innenseite eines über einen Radträger (90) an den radführenden Lenkern (95a, 95b) angebundenen Hinterrades (70) des Kraftfahrzeugs heranreicht, wobei die Unterbodenverkleidung (100, 200, 300, 400, 500, 600, 700) in Fahrzeuglängsrichtung (L) in drei Abschnitte unterteilt ist (110, 120, 130; 210, 220, 230; 310, 320, 330; 410, 420, 430; 510, 520, 530; 610, 620, 630; 710, 720, 730), und zwar in einen vorderen Abschnitt (110, 210, 310, 410, 510, 610, 710), einen mittleren Abschnitt (120, 220, 320, 420, 520, 620, 720) und einen hinteren Abschnitt (130, 230, 330, 430, 530, 630, 730), wobei der mittlere Abschnitt (120, 220, 320, 420, 520, 620, 720) sich wenigstens über einen Bereich unterhalb der radführenden Lenker (95a, 95b) auf einer Fahrzeugseite erstreckt und derart ausgebildet ist, dass er in einem funktionsgemäßen, an einem Kraftfahrzeug montierten Zustand im Fahrbetrieb des Kraftfahrzeugs zumindest teilweise einer im Wesentlichen vertikalen Bewegung der radführenden Lenker (95a, 95b) folgen oder nachgeben kann,
**dadurch gekennzeichnet, dass** der vordere Abschnitt (110, 210, 310, 410, 510, 610, 710) und der hintere Abschnitt (130, 230, 330, 430, 530, 630, 730) der Unterbodenverkleidung derart ausgebildet sind, dass sie ortsfest am Kraftfahrzeug anordbar sind und in einem funktionsgemäßen, am Kraftfahrzeug montierten Zustand einer im Wesentlichen vertikalen Bewegung der radführenden Lenker (95a, 95b) nicht folgen, so dass nur der vordere und der hintere Abschnitt ortsfest angebunden bzw. ortsfest fixiert sind, wobei der mittlere Abschnitt (120, 220, 320, 420, 520, 620, 720) zumindest über einen Teil seiner Breite mit dem vorderen Abschnitt (110, 210, 310, 410, 510, 610, 610) und/oder dem hinteren Abschnitt (130, 230, 330, 430, 530, 630, 730) verbunden ist.

2. Unterbodenverkleidung (100, 200) nach Anspruch 1, **dadurch gekennzeichnet, dass** die Unterbodenverkleidung (100, 200) einteilig ausgebildet ist.

3. Unterbodenverkleidung (100, 200) nach Anspruch 1 oder 2, **dadurch gekennzeichnet, dass** die Unterbodenverkleidung (100, 200) durch wenigstens zwei Schlitze (140, 240), die von einer, in einem funktionsgemäßen Einbauzustand der Innenseite des Hinterrades (70) zugewandten Außenkante (105) nach fahrzeuginnen verlaufen, derart unterteilt ist, dass der mittlere Abschnitt (120, 220) zumindest teilweise einer vertikalen Bewegung der radführenden Lenker (95a, 95b) folgen oder nachgeben kann.

4. Unterbodenverkleidung (100, 200) nach Anspruch 3, **dadurch gekennzeichnet, dass** die beiden Schlitze (140, 240) zwischen ihren fahrzeuginnenseitigen Enden durch ein Filmscharnier (250) miteinander verbunden sind, vorzugsweise durch ein im Wesentlichen in Fahrzeuglängsrichtung (L) verlaufendes Filmscharnier (250), bezogen auf einen funktionsgemäßen, an einem Kraftfahrzeug montierten Zustand der Unterbodenverkleidung (100, 200).

5. Unterbodenverkleidung (300, 400, 500, 600, 700) nach Anspruch 1, **dadurch gekennzeichnet, dass** die Unterbodenverkleidung (300, 400, 500, 600, 700) mehrteilig ausgebildet ist, wobei der mittlere Abschnitt (320, 420, 520, 620, 720) vorzugsweise mit dem vorderen Abschnitt (310, 410, 510, 610, 710) und/oder dem hinteren Abschnitt (330, 430, 530, 630, 730) über zumindest einen Teil der Breite der Unterbodenverkleidung (300, 400, 500, 600, 700) verbunden ist, insbesondere durch ein Filmscharnier (325a, 325b; 625a, 725a).

6. Unterbodenverkleidung (300, 400, 500, 600, 700) nach Anspruch 5, **dadurch gekennzeichnet, dass** der vordere Abschnitt (310, 410, 510, 610, 710) und der hintere Abschnitt (330, 430, 530, 630, 730) aus einem flexiblen Material sind und der mittlere Abschnitt (320, 420, 520, 620, 720) zumindest teilweise einen Bereich aus elastischem Material aufweist.

7. Unterbodenverkleidung (300, 400, 500, 600, 700) nach Anspruch 5 oder 6, **dadurch gekennzeichnet, dass** der mittlere Abschnitt (320, 420, 520, 620, 720) in Fahrzeuglängsrichtung (L) in wenigstens zwei Unterabschnitte (320v, 320m, 320h; 420v, 420m, 420h; 520v, 520m, 520h; 620v, 620m, 620h; 720v, 720m) unterteilt ist, und zwar wenigstens in einen vorderen Unterabschnitt (320v, 420v, 520v, 620v, 720v) und einen mittleren Unterabschnitt (320m, 420m, 520m, 620m, 720m), wobei der mittlere Unterabschnitt (320m, 420m, 520m, 620m, 720m) sich wenigstens über einen Bereich unterhalb eines der radführenden Lenker (95a, 95b) erstreckt, vorzugsweise über den Bereich unterhalb eines Federlenkers (95a), und zumindest über einen Teil seiner Breite mit dem vorderen Unterabschnitt (320v, 420v, 520v, 620v, 720v) verbunden ist.

8. Unterbodenverkleidung (300, 400, 500, 600, 700) nach Anspruch 7, **dadurch gekennzeichnet, dass** der mittlere Unterabschnitt (320m, 420m, 520m, 620m, 720m) aus elastischem Material ist und vorzugsweise mittels einer Kederverbindung (30) mit dem vorderen Unterabschnitt (320v, 420v, 520v, 620v, 720v) verbunden ist.

9. Unterbodenverkleidung (100, 200) nach einem der vorgenannten Ansprüche, **dadurch gekennzeichnet, dass** wenigstens der mittlere Abschnitt (120, 220) zumindest bereichsweise an einem der radführenden Lenker (95a, 95b) befestigt ist, vorzugsweise mittels eines Kardanlagers (50).

10. Unterbodenverkleidung (100, 200, 400, 500, 600, 700) nach einem der vorgenannten Ansprüche, **dadurch gekennzeichnet, dass** die Unterbodenverkleidung (100, 200, 400, 500, 600, 700) wenigstens eine Strömungslippe (60a, 60b, 60c, 60d, 60e, 60f) aufweist.

11. Zweispuriges Kraftfahrzeug mit einer Unterbodenverkleidung (100, 200, 400, 500, 600, 700), **dadurch gekennzeichnet, dass** die Unterbodenverkleidung (100, 200, 400, 500, 600, 700) nach einem der Ansprüche 1 bis 10 ausgebildet ist.

## Claims

1. Underbody cladding (100, 200, 300, 400, 500, 600, 700) for a two-track motor vehicle with wheel-guiding links (95a, 95b) as part of a rear axle, more especially for a passenger vehicle, for cladding the underbody at least on a vehicle side in the region of the wheel-guiding links (95a, 95b) of the rear axle, wherein the underbody cladding (100, 200, 300, 400, 500, 600, 700) is formed in such a way that, in a functional state installed on a two-track motor vehicle, the underbody cladding extends under the wheel-guiding links (95a, 95b) at least partially in a substantially horizontal plane and reaches at least in the direction of an outer side of the vehicle close to an inner side of a rear wheel (70) of the motor vehicle connected via a wheel carrier (90) to the wheel-guiding links (95a, 95b), wherein the underbody cladding (100, 200, 300, 400, 500, 600, 700) is divided in the vehicle longitudinal direction (L) into three portions (110, 120, 130; 210, 220, 230; 310, 320, 330; 410, 420, 430; 510, 520, 530; 610, 610, 630; 710, 720, 730), more specifically into a front portion (110, 210, 310, 410, 510, 610, 710), a middle portion (120, 220, 320, 420, 520, 620, 720) and a rear portion (130, 230, 330, 430, 530, 630, 730), wherein the middle portion (120, 220, 320, 420, 520, 620, 720) extends on a vehicle side at least over a region below the wheel-guiding links (95a, 95b) and is formed in such a way that, in a functional state installed on a motor vehicle and in driving operation of the motor vehicle, the middle portion at least partially can follow or yield to a substantially vertical movement of the wheel-guiding links (95a, 95b),
**characterised in that** the front portion (110, 210, 310, 410, 510, 610, 710) and the rear portion (130, 230, 330, 430, 530, 630, 730) of the underbody cladding are formed in such a way that they can be arranged in a stationary manner on the motor vehicle and, in a functional state installed on the motor vehicle, do not follow a substantially vertical movement of the wheel-guiding links (95a, 95b), such that only the front and the rear portion are connected in a stationary manner or are fixed in a stationary manner, wherein the middle portion (120, 220, 320, 420, 520, 620, 720) is connected at least over part of its width to the front portion (110, 210, 310, 410, 510, 610, 710) and/or to the rear portion (130, 230, 330, 430, 530, 630, 730).

2. Underbody cladding (100, 200) according to claim 1, **characterised in that** the underbody cladding (100, 200) is formed in one piece.

3. Underbody cladding (100, 200) according to claim 1 or 2, **characterised in that** the underbody cladding (100, 200) is divided by at least two slots (140, 240), which run from an outer edge (105) facing the inner side of the rear wheel (70) in a functional installed state, towards the vehicle interior, in such a way that the middle portion (120, 220) can at least partially follow or yield to a vertical movement of the wheel-guiding links (95a, 95b).

4. Underbody cladding (100, 200) according to claim 3, **characterised in that** the two slots (140, 240) are connected to one another between their vehicle-interior-side ends by a living hinge (250), preferably by a living hinge (250) running substantially in the vehicle longitudinal direction (L), based on a functional state of the underbody cladding (100, 200), installed on a motor vehicle.

5. Underbody cladding (300, 400, 500, 600, 700) according to claim 1, **characterised in that** the underbody cladding (300, 400, 500, 600, 700) is formed in a number of parts, wherein the middle portion (320, 420, 520, 620, 720) is connected preferably to the front portion (310, 410, 510, 610, 710) and/or the rear portion (330, 430, 530, 630, 730) over at least part of the width of the underbody cladding (300, 400, 500, 600, 700), more especially by a living hinge (325a, 325b; 625a, 725a).

6. Underbody cladding (300, 400, 500, 600, 700) according to claim 5, **characterised in that** the front portion (310, 410, 510, 610, 710) and the rear portion (330, 430, 530, 630, 730) are formed from a flexible material and the middle portion (320, 420, 520, 620, 720) at least partially comprises a region made of resilient material.

7. Underbody cladding (300, 400, 500, 600, 700) according to claim 5 or 6, **characterised in that** the middle portion (320, 420, 520, 620, 720) in the vehicle longitudinal direction (L) is divided into at least two sub-portions (320v, 320m, 320h; 420v, 420m, 420h; 520v, 520m, 520h; 620v, 620m, 620h; 720v, 720m), more specifically at least into a front sub-portion (320v, 420v, 520v, 620v 720v) and a middle sub-portion (320m, 420m, 520m, 620m, 720m), wherein the middle sub-portion (320m, 420m, 520m, 620m, 720m) extends at least over a region beneath one of the wheel-guiding links (95a, 95b), preferably over the region beneath a spring link (95a), and at least over part of its width is connected to the front sub-portion (320v, 420v, 520v, 620v, 720v).

8. Underbody cladding (300, 400, 500, 600, 700) according to claim 7, **characterised in that** the middle sub-portion (320m, 420m, 520m, 620m, 720m) is formed from resilient material and is preferably connected to the front sub-portion (320v, 420v, 520v, 620v, 720v) by means of a welt connection (30).

9. Underbody cladding (100, 200) according to any one of the preceding claims, **characterised in that** at least the middle portion (120, 220) is fastened at least in some regions to one of the wheel-guiding links (95a, 95b), preferably by means of a Cardan bearing (50).

10. Underbody cladding (100, 200, 300, 400, 500, 600, 700) according to any one of the preceding claims, **characterised in that** the underbody cladding (100, 200, 400, 500, 600, 700) comprises at least one flow lip (60a, 60b, 60c, 60d, 60e, 60f).

11. A two-track motor vehicle comprising an underbody cladding (100, 200, 400, 500, 600, 700), **characterised in that** that the underbody cladding (100, 200, 400, 500, 600 ,700) is formed according to any one of claims 1 to 10.

## Revendications

1. Habillage de dessous de caisse (100, 200, 300, 400, 500, 600, 700) destiné à un véhicule automobile à deux lignes de roues comprenant des bras de suspension de guidage de roue (95a, 95b) formant une partie d'un essieu arrière, en particulier destiné à un véhicule de tourisme, permettant d'habiller le dessous de caisse au moins sur le côté du véhicule situé dans la zone des bras de suspension de guidage de roue (95a, 95b) de l'essieu arrière, l'habillage de dessous de caisse (100, 200, 300, 400, 500, 600, 700) étant formé de sorte qu'il s'étende, à l'état fonctionnel monté sur un véhicule à deux lignes de roues, au-dessous des bras de suspension de guidage de roue (95a, 95b) au moins partiellement dans un plan essentiellement horizontal, et se prolonge, au moins dans la direction de l'extérieur du véhicule jusqu'à proximité du côté interne d'une roue arrière (70) du véhicule reliée par l'intermédiaire d'un support de roue (90) aux bras de suspension de guidage de roue (95a, 95b), l'habillage de dessous de caisse (100, 200, 300, 400, 500, 600, 700) étant subdivisé, dans la direction longitudinale (L) du véhicule en trois segments (110, 120, 130 ; 210, 220, 230 ; 310, 320, 330 ; 410, 420, 430 ; 510, 520, 530 ; 610, 620, 630 ; 710, 720, 730), à savoir un segment avant (110, 210, 310, 410, 510, 610, 710), un segment médian (120, 220, 320, 420, 520, 620, 720) et un segment arrière (130, 230, 330, 430, 530, 630, 730), le segment médian (120, 220, 320, 420, 520, 620, 720) s'étendant sur un côté du véhicule, au moins sur une zone située au-dessous des bras de suspension de guidage de roue (95a, 95b), et étant réalisé de sorte que, à l'état fonctionnel monté sur un véhicule, lors du roulage du véhicule, il puisse suivre, au moins partiellement, un mouvement essentiellement vertical des bras de suspension de guidage de roue (95a, 95b) ou fléchir,
**caractérisé en ce que**
le segment avant (110, 210, 310, 410, 510, 610, 710) et le segment arrière (130, 230, 330, 430, 530, 630, 730) de l'habillage de dessous de caisse sont réalisés de sorte qu'ils puissent être placés dans une position stationnaire sur le véhicule, et que, à l'état fonctionnel monté sur le véhicule, ils ne suivent pas un mouvement essentiellement vertical des bras de suspension de guidage de roue (95a, 95b), pour que seuls le segment avant et le segment arrière soient reliés ou fixés dans une position stationnaire, le segment médian (120, 220, 320, 420, 520, 620, 720) étant relié, au moins sur une partie de sa largeur avec le segment avant (110, 210, 310, 410, 510, 610, 710) et/ou avec le segment arrière (130, 230, 330, 430, 530, 630, 730).

2. Habillage de dessous de caisse (100, 200) conforme à la revendication 1,
**caractérisé en ce qu'**
il est réalisé en une seule partie.

3. Habillage de dessous de caisse (100, 200) conforme à la revendication 1 ou 2,
**caractérisé en ce qu'**
il est subdivisé par au moins deux fentes (140, 240) qui s'étendent du bord externe (105) tourné, à l'état fonctionnel monté vers le côté interne de la roue arrière (70) vers l'intérieur du véhicule, de sorte que le segment médian (120, 220) puisse suivre au moins partiellement un mouvement vertical des bras de suspension de guidage de roue (95a, 95b) ou fléchir.

4. Habillage de dessous de caisse (100, 200) conforme à la revendication 3,
**caractérisé en ce que**
les deux fentes (140, 240) sont reliées, entre leurs extrémités situées du côté de l'intérieur du véhicule par une charnière pelliculaire (250), de préférence par une charnière pelliculaire (250) s'étendant essentiellement dans la direction longitudinale (L) du véhicule, en considérant l'état fonctionnel monté sur un véhicule de l'habillage de dessous de caisse (100, 200).

5. Habillage de dessous de caisse (300, 400, 500, 600, 700) conforme à la revendication 1,
**caractérisé en ce qu'**
il est réalisé en plusieurs parties, le segment médian (320, 420, 520, 620, 720) étant de préférence reliée au segment avant (310, 410, 510, 610, 710) et/ou au segment arrière (330, 430, 530, 630, 730) sur au moins une partie de la largeur de cet habillage de dessous de caisse (300, 400, 500, 600, 700), en particulier par une charnière pelliculaire (325a, 325b, 625a, 725a).

6. Habillage de dessous de caisse (300, 400, 500, 600, 700) conforme à la revendication 5,
**caractérisé en ce que**
le segment avant (310, 410, 510, 610, 710) et le segment arrière (330, 430, 530, 630, 730) sont réalisés en un matériau flexible et le segment médian (320, 420, 520, 620, 720) comporte au moins partiellement une zone en un matériau élastique.

7. Habillage de dessous de caisse (300, 400, 500, 600, 700) conforme à la revendication 5 ou 6,
**caractérisé en ce que**
le segment médian (320, 420, 520, 620, 720) est subdivisé, dans la direction longitudinale (L) du véhicule en au moins deux sous-segments (320v, 320m, 320h, 420v, 420m, 420h, 520v, 520m, 520h, 620v, 620m, 620h, 720v, 720m), à savoir au moins en un sous-segment avant (320v, 420v, 520v, 620v, 720v) et un sous-segment médian (320m, 420m, 520m, 620m, 720m), le sous-segment médian (320m, 420m, 520m, 620m, 720m) s'étendant au moins sur une zone située au-dessous de l'un des bras de suspension de guidage de roue (95a, 95b), de préférence sur une zone située au-dessous d'un bras de suspension élastique (95a) et étant relié au moins sur une partie de sa largeur avec le sous-segment avant (320v, 420v, 520v, 620v, 720v).

8. Habillage de dessous de caisse (300, 400, 500, 600, 700) conforme à la revendication 7,
**caractérisé en ce que**
le sous-segment médian (320m, 420m, 520m, 620m, 720m) est réalisé en un matériau élastique et est de préférence relié au sous-segment avant (320v, 420v, 520v, 620v, 720v) au moyen d'un raccord à cadre (30).

9. Habillage de dessous de caisse (100, 200) conforme à l'une des revendications précédentes,
**caractérisé en ce qu'**
au moins le segment médian (120, 220) est fixé au moins par zone sur l'un des bras de suspension de guidage de roue (95a, 95b) de préférence au moyen d'une suspension de cardan (50).

10. Habillage de dessous de caisse (100, 200, 300, 400, 500, 600, 700) conforme à l'une des revendications précédentes,
**caractérisé en ce qu'**
il comporte au moins une lèvre d'écoulement (60a, 60b, 60c, 60d, 60e, 60f).

11. Véhicule automobile à deux lignes de roues comprenant un habillage de dessous de caisse (100, 200, 400, 500, 600, 700),
**caractérisé en ce que**
l'habillage de dessous de caisse (100, 200, 400, 500, 600, 700) est réalisé conformément à l'une des revendications 1 à 10.
